# EUROPEAN PATENT SPECIFICATION

(11) **EP 0 597 480 B1**
(45) Date of publication and mention of the grant of the patent: **20.08.1997**
(21) Application number: 93118308.1
(22) Date of filing: 11.11.1993
(51) Int. Cl.: G11B 5/66, G11B 5/85, G11B 5/64

(54) **Method for producing a magnetic recording medium**
Herstellungsverfahren magnetischer Aufzeichnungsträger
Méthode de fabrication de support d'enregistrement

(30) Priority: 12.11.1992 JP 302026/92
(43) Date of publication of application: 18.05.1994
(73) Proprietor: MATSUSHITA ELECTRIC INDUSTRIAL CO., LTD., Kadoma-shi, Osaka-fu, 571 (JP)
(72) Inventor: Sugita, Ryuji, Hirakata City 573 (JP); Tohma, Kiyokazu, Hirakata City 573 (JP); Ishida, Tatsuaki, Sakai City 591 (JP); Ban, Yasuaki, Neyagawa City 572 (JP)
(74) Representative: Jung, Elisabeth, Dr.

(56) References cited:
- EP-A- 0 053 811
- EP-A- 0 488 377
- US-A- 4 770 924
- PATENT ABSTRACTS OF JAPAN vol. 8, no. 155 (E-256)19 July 1984

## Description

### FIELD OF THE INVENTION AND RELATED ART STATEMENT

### 1. FIELD OF THE INVENTION

The present invention relates to a method for making a magnetic recording medium. More particularly, the present invention relates to a method for making a thin film magnetic recording medium which has a high S/N ratio and a high reproducing output.

### 2. DESCRIPTION OF THE RELATED ART

In recent years, a small sized magnetic recording and reproducing apparatus mounting parts at high density has been developed, and a magnetic recording medium having excellent recording and reproducing characteristics in a short-wavelength range has been required for the small sized magnetic recording and reproducing apparatus. At present, most of the magnetic recording and reproducing apparatuses are using a coated type magnetic recording medium, which is formed by coating magnetic particles on a substrate. There have been a number of improvements in the coated type magnetic recording medium, in order to meet the requirement for the small-sized magnetic recording and reproducing apparatus. However, there is still a few room for the improvement of the coated type magnetic recording medium.

A magnetic recording medium of thin film type has been developed as one of most favorable magnetic recording media, which exceeds the limit of recording density performance corresponding to the conventional magnetic recording media. The thin film type magnetic recording medium can be produced by a vacuum evaporation method, a sputtering method, a plating method or the like. The thin film type magnetic recording medium produced by such a method has excellent recording and reproducing characteristics in a short-wavelength range. A magnetic layer in the thin film type magnetic recording medium is formed by cobalt-based magnetic materials, for example, Co, Co-Ni, Co-Ni-P, Co-O, Co-Ni-O, Co-Cr, Co-Ni-Cr, etc. The vacuum evaporation method is the most preferable method for the practical forming of the magnetic layer. An evaporated magnetic recording tape having the magnetic layer made of Co-Ni-O is on the market as the tape for "Hi 8" (high band 8mm) video cassette recorder (VCR).

There is a tendency that in the future, the magnetic recording and reproducing apparatus will have further small- sized and high recording capacity. In order to achieve such objects, the linear recording density and track recording density on the magnetic recording medium must be improved to be used by such a magnetic recording and reproducing apparatus. Accordingly, it is necessary to provide a method for making a magnetic recording medium having improved S/N ratio, particularly S/N ratio in a short-wavelength range.

In the documents EP-A O 488 377 and US-A-4 770 924 also magnetic recording media according to the state of the art, both comprising a substrate and two (or more) magnetic layers are described.

### OBJECT AND SUMMARY OF THE INVENTION

An object of the present invention is to provide a method for making a magnetic recording medium having improved S/N ratio and high reproducing output.

In order to achieve the above-mentioned object, the magnetic recording medium produced according to the method of the present invention comprises:
a substrate,
a cobalt-based first magnetic layer, of which an axis of easy magnetization slants at an angle to a normal of a plane of said magnetic recording medium produced according to the method of the present invention, and in which high oxygen density area is arranged at a vicinity of the opposite face to the substrate, and
a cobalt-based second magnetic layer of which an axis of easy magnetization slants at an angle to a normal of a plane of the magnetic recording medium produced according to the method of the present invention, and in which high oxygen density area is arranged at a vicinity of the cobalt-based first magnetic layer.

Actually, the present invention in detail relates to a method for making a magnetic recording medium, comprising the steps of:
forming a cobalt and oxygen containing first magnetic layer (2) by vacuum evaporation onto a substrate (1) which is moved along a peripheral surface of a cylindrical can introducing oxygen from a position at a vicinity of a deposition end point of said cylindrical can into evaporated metal,
forming a cobalt and oxygen containing second magnetic layer (3) by vacuum evaporation onto said first magnetic layer (2) which is moved along a peripheral surface of said cylindrical can introducing oxygen from a position at a vicinity of a deposition end point of said cylindrical can into evaporated metal, and
exposing the surface of said second magnetic layer (3) to a reducing plasma and thereby providing that said second magnetic layer (3) has an oxygen concentration which is at a maximum proximate said first magnetic layer (2).

While the novel features of the method according to the invention are set forth particularly in the appended claims, the method according to the invention, both as regards the organization and the content, will be better understood and appreciated, along with other objects and features thereof, on the base of the following detailed description taken in conjunction with the drawings.

### BRIEF DESCRIPTION OF THE DRAWINGS

FIG.1 is a cross sectional view of a magnetic recording medium produced according to the method of the present invention.

FIG.2 schematically illustrates one embodiment of a vacuum evaporation apparatus for producing the magnetic recording medium according to the method of the present invention,

FIG.3 is an Auger depth profile which shows the results of an analysis of the magnetic recording medium produced according to the method of the present invention, by using the method of Auger electron spectroscopy.

It will be recognized that some or all of the Figures are schematic representations for purposes of illustration and do not necessarily depict the actual relative sizes or locations of the elements shown.

### DESCRIPTION OF THE PREFERRED EMBODIMENTS

In the following paragraph, a magnetic recording medium produced according to the method of the present invention will be explained in detail by making reference to the accompanying drawings.

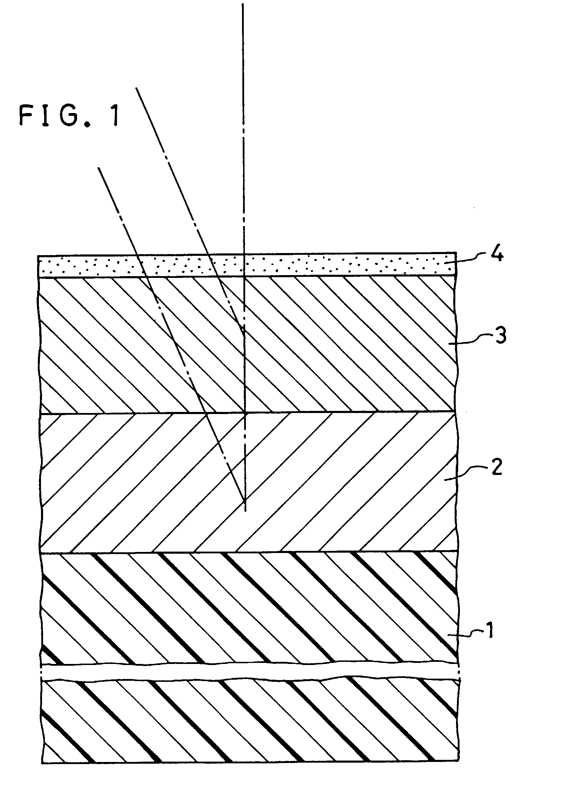

FIG.1 is a cross-sectional view of a magnetic recording medium which is made by the method of the present invention.

As shown in FIG.1, the magnetic recording medium produced according to the method of the present invention comprises a substrate 1 of high polymer, a first magnetic layer 2, a second magnetic layer 3 and a protective layer 4. The first magnetic layer 2 is formed on the substrate 1, and the second magnetic layer 3 is subsequently formed on the first magnetic layer 2.

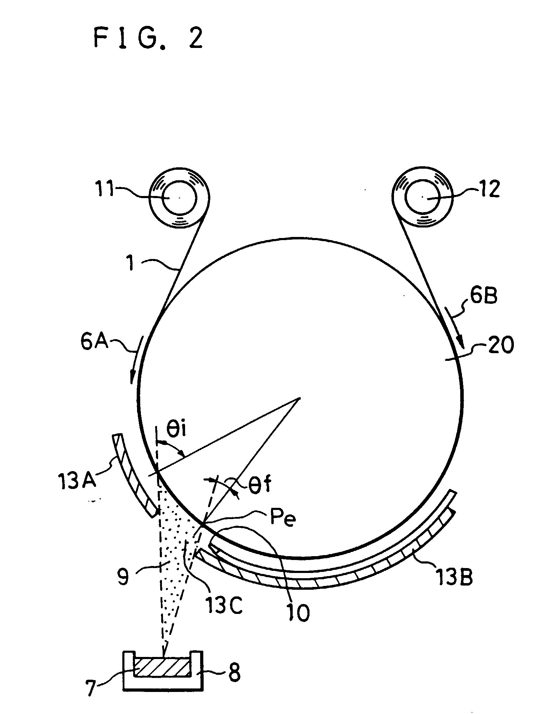

Furthermore, the method according to the present invention for producing a magnetic recording medium will be explained by making reference to FIG.2. FIG.2 schematically illustrates a vacuum evaporation apparatus for producing a magnetic recording medium according to the method of the present invention.

The first magnetic layer 2 of the magnetic recording medium produced according to the method of the invention is deposited on the substrate 1 by a vacuum evaporation apparatus. While depositing the first magnetic layer 2 according to the method of the invention, the substrate 1 travels around the peripheral surface of the cylindrical can 20 in the direction indicated by the arrow 6A. The substrate 1 is unwound from the supply roll 11, and wound on the take-up roll 12. Between the evaporation source 8 having the magnetic material 7 and the cylindrical can 20 there are provided shielding plates 13A, 13B for preventing deposition of undesirable evaporated magnetic metal on the substrate 1. The evaporated magnetic metal 9 from the evaporation source 8 is deposited on the substrate 1 through a window 13C between the shielding plates 13A, 13B. The magnetic material 7 of the evaporation source 8 is selected from cobalt-based alloy magnetic materials, for example Co, Co-Ni etc. In the vacuum evaporation apparatus, an electron beam evaporation source is utilized for evaporating the magnetic metals, such as a cobalt-based alloy having a high melting point, at a very high evaporating speed. The evaporated magnetic metal 9 is deposited on the substrate 1 through the window 13C for setting the range of incident angle from an initial incident angle θi to a final incident angle θf against the normal to the plane of the substrate 1. In other words, the angles θi and θf are incident angles at which the evaporated magnetic metal 9 is impinged at a deposition starting point and a deposition ending point on the cylindrical can 20, in order to form a first magnetic layer 2 on the substrate 1. In order to have a high reproducing output, the incident angle for the first magnetic layer 2 is preferably to be set at such conditions, that the final incident angle θf is smaller than the initial incident angle θi, and the final incident angle θf is set above 40°. The nozzle 10 for introducing oxygen is disposed at the vicinity of the deposition ending point of the cylindrical can 20 as shown in FIG.2. The nozzle 10 having a slit-shaped hole or plural holes disposal in a line issues a stream of oxygen which is directed along the surface of the deposited magnetic metal in the deposition process of the first magnetic layer 2.

Furthermore, the step for forming the second magnetic layer 3 of the magnetic recording medium produced according to the method of the present invention will be explained.

After having formed the first magnetic layer 2 by the vacuum evaporation method, the substrate 1 having the first magnetic layer 2 has been wound up by the take-up roll 12. Furthermore, the substrate 1 wound on the take-up roll 12 is transferred on the circumference of the cylindrical can 20 which rotates in the direction shown by the arrow 6B. Then the substrate 1 is wound up by and on the supply roll 11. In this rewinding operation, electric power for the evaporation source 8 may be turned off, in order to evaporate not the magnetic material 7. And/or, the window 13C between the shielding plates 13A, 13B may be closed by a shutter (not shown), in order to prevent the substrate 1 from forming of the evaporated magnetic metal 9.

Next, the second magnetic layer 3 is deposited on the first magnetic layer 2 by a producing step being similar to the deposition of the first magnetic layer 2. In this deposition step, the substrate 1 travels in the direction indicated by the arrow 6A in FIG.2. In this step of producing the second magnetic layer 3 , the incident angle for the second magnetic layer 3 is preferably to be set at the same condition as the incident angle has been set for the step of producing the first magnetic layer 2, i.e., the final incident angle θf is smaller than the initial incident angle θi, and the final incident angle θf is set above 40°.

During the steps of producing the first and the second magnetic layers 2 and 3, cobalt alloy as the magnetic material 7 is melting in the evaporation pot and it serves as an evaporation source. The nozzle 10, which is disposed adjacent to the deposition ending point of the cylindrical can 20, blows oxygen into the evaporated magnetic metal 9.

After having formed the first and second the magnetic layers 2 and 3 on the substrate 1, the magnetic recording medium is taken out from the vacuum deposition apparatus, and is disposed in a vacuum chamber for the plasma treatment. In the vacuum chamber for the plasma treatment, the magnetic recording medium, which is running, is exposed by a plasma of a mixed gas consisting of Ar and CH₄. This treatment gives rise to the result, that the oxygen density at the vicinity of the second magnetic layer 3 is decreased, and a protective layer 4 of carbon is formed on the second magnetic layer 3.

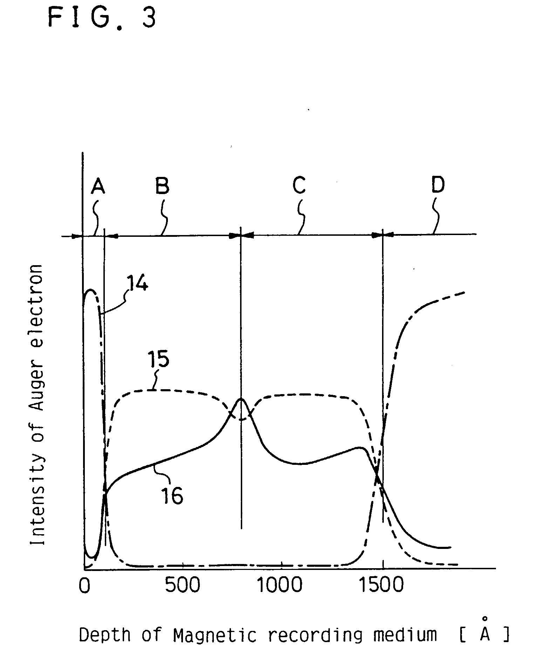

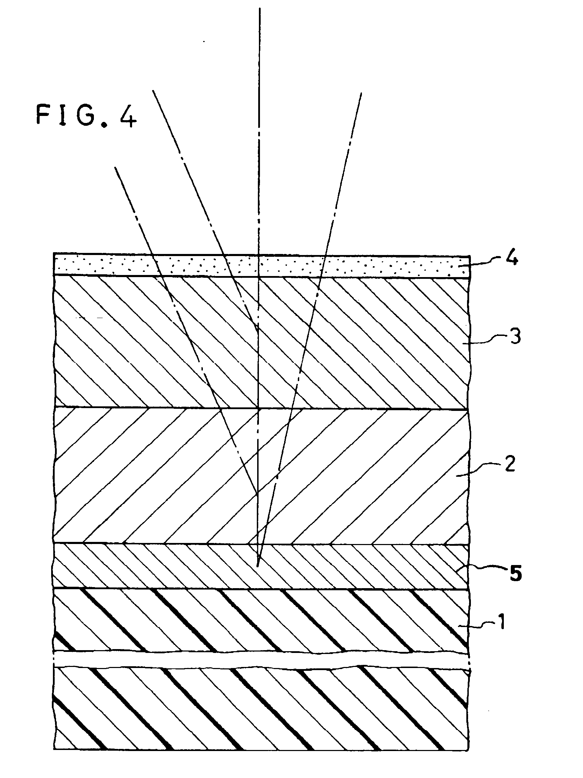

FIG.3 show the results of an Auger electron spectroscopy analysis for one example of the magnetic recording medium which is produced by utilizing the above-mentioned vacuum evaporation method in accordance with the present invention. FIG.3 shows the relationship between the depth of the thickness from the surface of the magnetic recording medium produced according to the method of the invention (abscissa) and the intensity of the Auger electron (ordinate) in the magnetic recording medium produced according to the method of the invention. In FIG.3, 0 Å [Angstrom] indicates the position of the surface of the magnetic recording medium, an alternate long and short dashed line 14 shows carbon, a curved broken line 15 shows cobalt, and a curved line 16 shows oxygen. Furthermore, the range A is the area of the carbon protective layer 4, the range B is the area of the second magnetic layer 3, the range C is the area of the first magnetic layer 2, and the range D is the area of the substrate 1 of high polymer.

One of the characteristics of a magnetic recording medium produced according to the method of the present invention is a curved distribution of the oxygen density in the first and the second magnetic layers 2 and 3, i.e., the high oxygen density area in the first magnetic layer 2 is arranged at the vicinity of the second magnetic layer 3, and the high oxygen density area in the second magnetic layer 3 is arranged at the vicinity of the first magnetic layer 2. The above-mentioned conditions for the deposition step are possible by means of the following adjustments: arrangement of the nozzle 10 for introducing oxygen, introducing amount of oxygen, arrangement (distance and angle etc.) of the evaporation source 8, arrangements of the window 13C between the shielding plates 13A, 13B, conditions (exposing time interval and substrate temperature etc.) of the plasma treatment, and so on.

For the steps in order to produce both the first and the second magnetic layer 2 and 3, it is important, that the nozzle 10 is disposed at the vicinity of the deposition ending point Pe (corresponding to the final incident angle θf) of the cylindrical can 20, in order to blow the oxygen effectively into the evaporated atoms of the magnetic metal. Especially, referring to the step in order to produce the second magnetic layer 3, it is important that the deposition step and the plasma treatment step are carried out under suitable conditions, in order to provide the high oxygen density area at the vicinity of the first magnetic layer 2. If the nozzle 10 would be disposed at the vicinity of the deposition starting point of the cylindrical can 20, and blow into the evaporated atoms in the producing process for the second magnetic layer 3, such magnetic recording medium would not be characterized in having a high reproducing output.

As regards furthermore the steps in order to produce both the first magnetic layer 2 and the second magnetic layer 3, the incident angle is preferably set according to the aforementioned conditions, i.e., the initial incident angle θi is higher than the final incident angle θf (θi>θf). If a magnetic recording film would be formed under conditions being opposite to the above-mentioned ones, i.e., the incident angle is set to θi<θf, a high reproducing output could not be obtained, and the durability would been remarkably deteriorated.

As mentioned above, the magnetic recording medium being produced in accordance with the method according to the present invention is characterized in having a first magnetic layer 2 and a second magnetic layer 3, of which the axes of easy magnetization slant from the normal of the plane of the magnetic recording medium. The first magnetic layer 2 is formed by cobalt-based material having the high oxygen density area at the vicinity of the second magnetic layer 3. The second magnetic layer 3 is formed by cobalt-based material having the high oxygen density area at the vicinity of the first magnetic layer 2.

Furthermore, concerning the first magnetic layer 2 and the second magnetic layer 3, the relation between the recording and reproducing characteristics and the distribution of the oxygen density is explained with reference to the following table.

**Table**

| Example No. | Reproducing Output [dB] | Noise [dB] |
|---|---|---|
| (1) | 0 | 0 |
| (2) | - 2 | + 1 |
| (3) | - 1 | + 1 |
| (4) | - 4 | + 2 |

In the table, the magnetic recording film of example (1) has the following distribution of the oxygen density: the first magnetic layer 2 has the high oxygen density area at the vicinity of the second magnetic layer 3, and the second magnetic layer 3 has the high oxygen density area at the vicinity of the first magnetic layer 2. That is, the example (1) is the magnetic recording film produced in accordance with the method according to the present invention.

The magnetic recording film of example (2) has the following distribution of the oxygen density: the first magnetic layer 2 has the high oxygen density area at the vicinity of the second magnetic layer 3, and the second magnetic layer 3 has the high oxygen density area at the vicinity of the right side surface of the magnetic recording film.

The magnetic recording film of example (3) has the following distribution of the oxygen density: the first magnetic layer 2 has the high oxygen density area at the vicinity of the substrate 1, and the second magnetic layer 3 has the high oxygen density area at the vicinity of the first magnetic layer 2.

The magnetic recording film of example (4) has the following distribution of the oxygen density: the first magnetic layer 2 has the high oxygen density area at the vicinity of the substrate 1, and the second magnetic layer 3 has the high oxygen density area at the vicinity of the right side surface of the magnetic recording film.

The table shows measured data with regard to the reproducing output and noise referring to the above-mentioned examples of magnetic recording films. The magnetic recording films, which had been utilized in the above-mentioned measurements, had a thickness of 1400 Å [Angstrom] as a whole, and furthermore they had a thickness of 100 Å as regards the carbon protective layer 4 on the right side surface of each magnetic recording film. The values of the reproducing outputs in the table were measured by reproducing signals having a wavelength of 0.5 µm. The noise data in the table indicate values of noise outputs of a frequency corresponding to the wavelength of 0.6 µm, when the signals having a wavelength of 0.5 µm were recorded and reproduced. The values of the reproducing output and the noise in the table are shown relatively to the value of the example (1), which has been set to 0 dB.

On the base of the results in the table, it is obvious, that the example (1), corresponding to the magnetic recording film produced in accordance with the method according to the present invention has much higher reproducing output and lower noise than the other examples (2), (3) or (4).

It is considered, that the reason, why the reproducing output of example (1) is higher than that of example (2) is the oxygen density of the example (1), which latter is lower than that of the example (2) at the vicinity of the right side surface of the second magnetic layer 3. Furthermore, the reason, why the noise of the example (1) is lower than that of example (2) is considered, that the example (1) is weak as regards the ferromagnetic coupling between the first magnetic layer 2 and the second magnetic layer 3 in comparison with example (2). Furthermore, it is considered, that the reasons why the reproducing output value of example (1) is higher than the corresponding values of examples (3) and (4), and why furthermore the noise value of example (1) is lower than the corresponding values of examples (3) and (4), are the facts, that the example (1) is weak as regards the ferromagnetic coupling between the first magnetic layer 2 and the second magnetic layer 3 in comparison with examples (3) and (4). Regarding especially the example (4), since the ferromagnetic coupling between the first magnetic layer 2 and the second magnetic layer 3 is stronger than the corresponding values as regards the other examples, which latter-mentioned results are remarkably expressed in the table.

Therefore, the magnetic recording medium produced in accordance with the method of the present invention, having two evaporated magnetic layers having cobalt-based alloy including oxygen, in characterized in having a high S/N ratio in comparison with the other magnetic recording media having different distributions of the oxygen density.

Regarding the above-mentioned magnetic recording medium produced according to the method of the present invention, in order to provide a magnetic recording medium having a further improved reproducing output, the first magnetic layer 2 is preferably formed to have the higher coersive force in the longitudinal direction than the coersive force in the longitudinal direction of the second magnetic layer 3. The following means together provide the first magnetic layer 2 and the second magnetic layer 3. The incident angle for producing the first magnetic layer 2 is set to be higher than the incident angle for the step of producing the second magnetic layer 3. The substrate temperature for producing the first magnetic layer 2 is set to be higher than the substrate temperature for the step of producing the second magnetic layer 3. And/or the introduction of oxygen is controlled, resulting in providing an appropriate amount.

As regards the above-mentioned coersive force, concrete examples are as follows: A magnetic recording film corresponding to example (5) was produced, which is characterized in having a first magnetic layer 2, having a coersive force of 1800 Oe [Oersted] in the longitudinal direction, and a second magnetic layer 3, having a coersive force of 1600 Oe in the longitudinal direction. A magnetic recording film corresponding to example (6) was produced, which is characterized in having a first magnetic layer 2 and a second magnetic layer 3, which layers both have a coersive force of 1800 Oe, respectively. A magnetic recording film corresponding to example (7) was produced, which is characterized in having a first magnetic layer 2 and a second magnetic layer 3, which layers both have a coersive force of 1600 Oe, respectively. Regarding the above-mentioned examples (5), (6) and (7), the example (5) has a higher reproducing output value corresponding to 1---2 dB than the magnetic recording films according to the examples (6) and (7). As the reason, why such results are obtainable, is considered the fact, that the recording demagnetization is affected by the coersive force. Improved recording demagnetization is obtainable by using a magnetic recording medium, which is characterized in having a coersive force in the longitudinal direction of the first magnetic layer 2, which is higher than the coersive force in the longitudinal direction of the second magnetic layer 3. Therefore, a strong recording magnetization and a high reproducing output is obtainable as regards the magnetic recording medium produced in accordance with the method according to the present invention.

Regarding the above-mentioned two-layer structure, a high reproducing output is obtainable on the base of such a structure, which is characterized in having a surface side magnetic layer, which is produced to have the lower coersive force than that of the substrate side magnetic layer. These results are quite in contradiction to the features of a conventional longitudinal magnetic recording medium. The above-mentioned results would be provided on the base, that the magnetic recording medium produced in accordance with the method according to the present invention has magnetic layers, in which layers the axes of easy magnetization slant from the normal of the plane of the magnetic recording medium.

Though the above-mentioned magnetic recording medium produced in accordance with the method according to the present invention has the first magnetic layer 2 and the second magnetic layer 3, a cobalt-based oxidized layer may be additionally formed on the substrate of high polymer. In the case of this embodiment, the first magnetic layer 2 and the second magnetic layer 3 are to be produced on the cobalt-based oxidized layer. The magnetic recording medium having additionally the oxidized layer, has an improved reproducing output value corresponding to 1 --- 2 dB in comparison with the magnetic recording medium produced in accordance with the method of the invention, but having only the first and second magnetic layers 2 and 3. The cobalt-based oxidized layer is formed by means of the substantially same producing process steps which have been described above in order to produce also the first and second magnetic layers, provided that the necessary amount of the oxygen, in order to transform all evaporated metal to the oxidized layer, is introduced from the nozzle 10.

The oxidized layer deposited as result of the above-mentioned producing process step has a columnar structure. In the columnar structure, the inclination direction of the columnar grain against the normal of the plane of the magnetic recording medium is arranged to be the opposite direction to the inclination direction of the columnar grain of the first and second magnetic layers 2 and 3. Therefore, improved magnetic characteristics and excellent recording and reproducing characteristics are obtainable on the base of the magnetic recording medium produced in accordance with the method according to the present invention.

Detailed elucidation as regards a concrete example corresponding to a magnetic recording film produced according to the method of the invention has been made hereafter.

A CoO layer as cobalt-based oxidized layer was deposited on the substrate 1 consisting of high polymer by using the vacuum evaporation apparatus as shown in FIG.2. Cobalt, serving as the magnetic material 7 is melting in the melting pot, and it serves as an evaporation source 8. The cylindrical can 20, which is disposed over the evaporation source 8, has a diameter of 1 m [Meter], and the surface of the cylindrical can 20 is kept at room temperature (about 20°C). A polyethylene terephthalate film having a thickness of 7 µm was used as the substrate 1 consisting of high polymer film.

The deposition of the oxidized layer was carried out under the following conditions: the initial incident angle θi was 35°, and the final incident angle θf was 20°. Oxygen was introduced with a rate of 3 liter/min. through the nozzle 10 into the vacuum chamber.

Under the above-mentioned conditions, the substrate 1, which was 500 mm in width, was transferred on the circumference of the cylindrical can 20, which latter was rotating as shown by the arrow 6A of FIG.2. The cylindrical can 20 was rotated with a peripheral velocity of 150 m/min. The oxidized layer, having a thickness of 0.02 µm, was formed on the substrate 1, using an average deposition rate of 0.5 µm/s. The deposited oxidized-layer had a columnar structure, being characterized in having an angle of inclination of a columnar grain of about 20° from the normal of the plane of the layer.

After having finished the deposition of the oxidized layer on the substrate 1, the roll on which the substrate 1 coated with the oxidized layer had been wound, was removed from the position of the take-up roll 12, and located at the position of the supply roll 11 shown in FIG.2.

In the next step of the process, the first magnetic layer 2 was deposited on the oxidized layer covering the substrate 1, which was transferred in the direction shown by the arrow 6A in FIG.2. As regards the deposition step in order to produce the first magnetic layer 2, cobalt was used as the magnetic material 7 which had been used in the deposition step in order to produce the CoO layer representing the oxidized layer. The cylindrical can 20 was kept at room temperature (about 20°C).

The deposition of the first magnetic layer 2 was carried out under the following conditions: the initial incident angle θi was 75° , and the final incident angle θf was 55° . Oxygen was introduced with a rate of 1.2 liter/min. through the nozzle 10 into the evaporated magnetic metal.

Under the above-mentioned conditions, the substrate 1 was transferred on the circumference of the cylindrical can 20, which was rotating as shown by the arrow 6A. The cylindrical can 20 was rotated with a peripheral velocity of 80 m/min. The first magnetic layer 2, having a thickness of 0.06 µm was deposited on the oxidized layer using an average deposition rate of 0.3 µm/s.

Furthermore, the substrate 1, wound on the take-up roll 12, was rewound by the supply roll 11 in the direction shown by the arrow 6B of FIG.2. During the rewinding operation, the electric power for the evaporation source 8 was turned off, and the window 13C was closed by a shutter (not shown in FIG.2).

In the next step of the process, the second magnetic layer 3 was deposited on the first magnetic layer 2, while the substrate 1 was transferred in the direction shown by the arrow 6A. Cobalt was used as the magnetic material 7 which was used in the deposition step in order to produce the first magnetic layer 2. The cylindrical can 20 was kept at room temperature (about 20°C). The deposition of the second magnetic layer 3 was carried out under the following conditions: the initial incident angle θi was 75° , and the final incident angle θf was 55°. Oxygen was introduced with a rate of 1.0 liter/min, from the nozzle 10.

Under the above-mentioned conditions, the substrate 1 was transferred on the circumference of the cylindrical can 20, which was rotating as shown by the arrow 6A. The cylindrical can 20 was rotated with a peripheral velocity of 80 m/min. The second magnetic layer 3, having a thickness of 0.06 µm, was deposited on the first magnetic layer 2 using an average deposition rate of 0.3 µm/s.

The first magnetic layer 2 and the second magnetic layer 3 had the same angles of about 50° as regards the inclination of a columnar grain from the normal of the plane of the magnetic recording film. Therefore, the inclinations of the columnar grains of the first magnetic layer 2 and the second magnetic layer 3 were in the same side with respect to the normal of the plane of the magnetic recording film as shown in FIG.1. Furthermore, the directions of the inclinations in the first magnetic layer 2 and the second magnetic layer 3 were opposite to those of the CoO layer with respect to the normal of the plane of the magnetic recording film.

After having finished the deposition step in order to produce the second magnetic layer 3 of the magnetic recording film, the substrate 1 having the second magnetic layer 3 was taken out from the vacuum evaporation apparatus. Furthermore, the substrate 1, having the first magnetic layer 2 and the second magnetic layer 3, was located in a vacuum chamber in order to carry out the plasma treatment and the deposition step in order to provide a protective layer. In the vacuum chamber, a mixing gas consisting of CH₄ and Ar was converted into the plasma state. The plasma treatment was carried out onto the surface of the second magnetic layer 3 by means of blowing the surface of the second magnetic layer 3 by the plasma. The surface of the second magnetic layer 3 was exposed for a predetermined time interval in the range between 0.2---2.0 s. The magnetic recording film was kept at room temperature (about 20°C) during the step of the plasma treatment. As a result, the oxygen density of the surface of the second magnetic layer 3 was decreased, and the high oxygen density area in the second magnetic layer 3 was arranged at the vicinity of the first magnetic layer 2. The first magnetic layer 2 and the second magnetic layer 3 as formed by the above-mentioned process finally had a distribution of the oxygen density like that as shown in FIG.3.

The magnetic recording film having the first magnetic layer 2 and the second magnetic layer 3 was cut in plural tapes to produce thin film magnetic recording tapes. The characteristics as regards recording and reproducing were evaluated using a ring type magnetic head made of Sendust, which was characterized in having a gap length of 0.1 µm. In order to provide the possibility of a comparison, the same test as described above was repeated with a conventional metal evaporated tape for "Hi 8" VCR (Video Cassette Recorder). The results of the evaluation were as follows: Thin film magnetic recording tape produced in accordance with the method according to the present invention had a reproducing output of 3 dB on the base of utilizing recording signals having a wavelength of 3.8 µm, or a reproducing output of 6 dB on the base of using recording signals with a wavelength of 0.54 µm, or a reproducing output of 8 dB on the base of using recording signals with a wavelength of 0.38 µm, in comparison with the conventional metal evaporated tape for "Hi 8" VCR. The above-mentioned results are to be interpreted, that the thin film magnetic recording tape produced in accordance with the method according to the present invention has a significantly higher reproducing output than the conventional metal evaporated tape.

Furthermore, the thin film magnetic recording tape produced in accordance with the method according to the present invention has lower noise values of about 1dB in all band than the conventional metal evaporated tape. Therefore, the thin film magnetic recording tape produced according to the method of the present invention has a high S/N ratio in comparison with the conventional metal evaporated tape.

The above-mentioned example being characterized in having the high S/N ratio by means of utilizing the first and second magnetic layers, which both represent a Co-O layer, which has been deposited under conditions corresponding to a deposition step using an initial incident angle θi of 75°, and a final incident angle θf of 55° . However, another magnetic recording medium was formed on the base of the method according to the invention by means of utilizing different producing conditions, methods and materials so that the first magnetic layer 2 has the high oxygen density area at the vicinity of the second magnetic layer 3 and the second magnetic layer 3 has the high oxygen density area of the vicinity of the first magnetic layer 2. As a result, the magnetic recording medium produced according to the method of the invention had a high reproducing output value and a high S/N ratio.

Apart from the above-mentioned examples, wherein the first and second magnetic layers are formed by Co-O, suitable materials to be used in order to produce the cobalt-based first and second magnetic layers can be chosen properly from the alloys: Co-O, Co-Ni-O, Co-Fe-O, Co-Ni-Fe-O.

Furthermore, apart from the above-mentioned examples, wherein the substrate 1 is formed by a polyethylene terephthalate film, suitable materials for the substrate 1 to be used in order to produce a magnetic recording medium in accordance with the method according to the present invention can be chosen properly from high polymer films, e.g., polyethylene terephthalate film, polyethylene naphthalate film, polyimide film, polyamide film and polyetherimide film.

Apart from the above-mentioned embodiment, wherein CH₄ was used as the gas for the plasma treatment, a modified embodiment may be characterized in that, Hydrocarbon gas, such as C₂H₆, C₄H₁₀ or the like was used for the plasma treatment.

## Claims

1. A method for making a magnetic recording medium, comprising the steps of:
forming a cobalt and oxygen containing first magnetic layer (2) by vacuum evaporation onto a substrate (1) which is moved along a peripheral surface of a cylindrical can introducing oxygen from a position at a vicinity of a deposition end point of said cylindrical can into evaporated metal,
forming a cobalt and oxygen containing second magnetic layer (3) by vacuum evaporation onto said first magnetic layer (2) which is moved along a peripheral surface of said cylindrical can introducing oxygen from a position at a vicinity of a deposition end point of said cylindrical can into evaporated metal, and
exposing the surface of said second magnetic layer (3) to a reducing plasma and thereby providing that said second magnetic layer (3) has an oxygen concentration which is at a maximum proximate said first magnetic layer (2).

2. A method for making a magnetic recording medium in accordance with claim 1, wherein
said cylindrical can is running in the same direction on said steps of forming said first magnetic layer (2) and said second magnetic layer (3).

3. A method for making a magnetic recording medium in accordance with claim 1, further comprising a step of
forming a CoO containing layer (5) onto a substrate (1) before said step of forming said first magnetic layer (2).

4. A method for making a magnetic recording medium in accordance with claim 3, wherein by vacuum evaporation onto a substrate (1)
said CoO containing layer (5) is formed to have opposite inclinations of the columns of columnar grains of said first magnetic layer (2) and said second magnetic layer (3) with respect to a normal of the plane of said magnetic recording medium.

5. A method for making a magnetic recording medium in accordance with claim 3, wherein
said first magnetic layer (2) and said second magnetic layer (3) each have a structure of columnar grains and inclinations of the columns of columnar grains of said first magnetic layer (2) and said second magnetic layer (3) are in the same side with respect to a normal of the plane of said magnetic recording medium, and
said CoO containing layer (5) has a structure of columnar grains and inclinations of the columns of columnar grains of said CoO containing layer (5) and said magnetic layers (2, 3) are in the opposite side with respect to a normal of the plane of said magnetic recording medium.

6. A method for making a magnetic recording medium in accordance with claim 1, further comprising the step of forming a protective layer (4) formed on said second magnetic layer (3).

7. A method for making a magnetic recording medium in accordance with claim 6, wherein said protective layer (4) is a carbon protective layer.

## Patentansprüche

1. Eine Methode zur Herstellung eines magnetischen Speichermediums, welche Methode die nachfolgend aufgeführten Schritte umfasst:
Herstellung einer Kobalt und Sauerstoff enthaltenden, ersten magnetischen Schicht (2) mit Hilfe der Vakuumbedampfung auf einem Substrat (1), welches Substrat entlang einer äußeren Oberfläche einer zylinderförmigen Walze bewegt wird, und wobei ausgehend von einer in der Nähe des Endpunktes des Abscheidungsschrittes gelegenen Stelle der besagten, zylinderförmigen Walze Sauerstoff in das verdampfte Metall eingeführt wird, und
Herstellung einer Kobalt und Sauerstoff enthaltenden, zweiten magnetischen Schicht (3) mit Hilfe der Vakuumbedampfung auf der besagten, ersten magnetischen Schicht (2), welche Schicht entlang einer äußeren Oberfläche der besagten, zylinderförmigen Walze bewegt wird und wobei ausgehend von einer in der Nähe des Endpunktes des Abscheidungsschrittes gelegenen Stelle der besagten, zylinderförmigen Walze Sauerstoff in das verdampfte Metall eingeführt wird, und
Behandlung der Oberfläche der besagten, zweiten magnetischen Schicht (3) mit einem reduzierenden Plasma, wodurch erreicht wird, daß die besagte, zweite magnetische Schicht (3) eine Sauerstoffkonzentration aufweist, die sich nahe bei der ersten magnetischen Schicht (2) auf ihrem Maximalwert befindet.

2. Eine Methode zur Herstellung eines magnetischen Speichermediums in Übereinstimmmung mit Anspruch 1, wobei sich die besagte, zylinderförmige Walze im Rahmen der besagten Schritte zur Herstellung der besagten, ersten magnetischen Schicht (2) und der besagten, zweiten magnetischen Schicht (3) jeweils in der gleichen Richtung bewegt.

3. Eine Methode zur Herstellung eines magnetischen Speichermediums in Übereinstimmmung mit Anspruch 1, welche Methode außerdem vor dem besagten Schritt zur Herstellung der ersten, magnetischen Schicht (2) einen Schritt zur Herstellung einer CoO enthaltenden Schicht (5) auf dem Substrat (1) umfaßt.

4. Eine Methode zur Herstellung eines magnetischen Speichermediums in Übereinstimmmung mit Anspruch 3, wobei mit Hilfe der Vakuumbedampfung auf einem Substrat (1) die besagte, CoO enthaltende Schicht in einer solchen Art und Weise hergestellt wird, daß ihre Kolumnen der kolumnaren Körner im Hinblick auf die Normalenachse der Ebene des besagten, magnetischen Speichermediums eine Neigung aufweisen, welche zu der entsprechenden, jeweiligen Neigung der kolumnaren Körner der besagten, ersten magnetischen Schicht (2) und der besagten, zweiten magnetischen Schicht (3) entgegengesetzt ausgerichtet ist.

5. Eine Methode zur Herstellung eines magnetischen Speichermediums in Übereinstimmmung mit Anspruch 3, wobei die besagte, erste magnetische Schicht (2) und die besagte, zweite magnetische Schicht (3) jeweils eine aus kolumnaren Körnern bestehende Struktur aufweisen, und wobei die jeweilige Neigung der aus den besagten, kolumnaren Körner bestehenden Kolumnen der besagten, ersten magnetischen Schicht (2) und der besagten, zweiten magnetischen Schicht (3) im Hinblick auf die Normalenachse der Ebene des besagten, magnetischen Speichermediums auf die gleiche Seite ausgerichtet ist, und
die besagte, CoO enthaltende Schicht (5) eine aus kolumnaren Körnern bestehende Struktur aufweist, und wobei die jeweilige Neigung der aus den besagten, kolumnaren Körner bestehenden Kolumnen der besagten, CoO enthaltenden Schicht (5) einerseits und der besagten magnetischen Schichten (2), (3) andererseits im Hinblick auf die Normalenachse der Ebene des besagten, magnetischen Speichermediums auf jeweils entgegengesetzte Seiten ausgerichtet ist.

6. Eine Methode zur Herstellung eines magnetischen Speichermediums in Übereinstimmmung mit Anspruch 1, welche Methode außerdem den Schritt zur Herstellung einer auf der besagten, zweiten magnetischen Schicht (3) hergestellten Schutzschicht (4) umfaßt.

7. Eine Methode zur Herstellung eines magnetischen Speichermediums in Übereinstimmmung mit Anspruch 6, wobei die besagte Schutzschicht (4) eine Kohlenstoffschutzschicht darstellt.

## Revendications

1. Procédé pour fabriquer un support d'enregistrement magnétique, comprenant les étapes consistant à :
former une première couche magnétique comprenant du cobalt et de l'oxygène (2) par évaporation sous vide sur un substrat (1) lequel est déplacé le long d'une surface périphérique d'une boîte cylindrique introduisant de l'oxygène à partir d'une position au voisinage d'un point de fin de dépôt de ladite boîte cylindrique dans un métal évaporé,
former une seconde couche magnétique contenant du cobalt et de l'oxygène (3) par évaporation sous vide sur ladite première couche magnétique (2), laquelle est déplacée le long d'une surface périphérique de ladite boîte cylindrique introduisant l'oxygène à partir d'une position au voisinage du point de fin de dépôt de ladite boîte cylindrique dans le métal évaporé, et
exposer la surface de ladite seconde couche magnétique (3) à un plasma de réduction et faire en conséquence que ladite seconde couche magnétique (3) présente une concentration en oxygène qui est à un maximum à proximité de ladite première couche magnétique (2).

2. Procédé pour fabriquer un support d'enregistrement magnétique selon la revendication 1, dans lequel
ladite boîte cylindrique se déplace dans la même direction au cours desdites étapes consistant à former ladite première couche magnétique (2) et ladite seconde couche magnétique (3).

3. Procédé pour fabriquer un support d'enregistrement magnétique selon la revendication 1, comprenant de plus une étape consistant à :
former une couche contenant CoO (5) sur un substrat (1) avant ladite étape consistant à former ladite première couche magnétique (2).

4. Procédé pour fabriquer un support d'enregistrement magnétique selon la revendication 3, dans lequel par évaporation sous vide sur un substrat (1)
ladite couche contenant CoO (5) est formée pour avoir des inclinaisons opposées des colonnes des grains en colonnes de ladite première couche magnétique (2) et de ladite seconde couche magnétique (3) par rapport à une perpendiculaire du plan dudit support d'enregistrement magnétique.

5. Procédé pour fabriquer un support d'enregistrement magnétique selon la revendication 3, dans lequel
ladite première couche magnétique (2) et ladite seconde couche magnétique (3) ont chacune une structure de grains en colonnes et les inclinaisons des colonnes des grains en colonnes de ladite première couche magnétique (2) et de ladite seconde couche magnétique (3) sont sur le même côté par rapport à une perpendiculaire du plan dudit support d'enregistrement magnétique, et
ladite couche contenant CoO (5) a une structure de grains en colonnes et les inclinaisons des colonnes des grains en colonnes de ladite couche contenant CoO (5) et lesdites couches magnétiques (2, 3) sont sur le côté opposé par rapport à une perpendiculaire du plan dudit support d'enregistrement magnétique.

6. Procédé pour fabriquer un support d'enregistrement magnétique selon la revendication 1, comprenant de plus l'étape consistant à former une couche de protection (4) formée sur ladite seconde couche magnétique (3).

7. Procédé pour fabriquer un support d'enregistrement magnétique selon la revendication 6, dans lequel ladite couche de protection (4) est une couche de protection en carbone.
